# FASCICULE DE BREVET EUROPEEN

(11) **EP 3 560 168 B1**
(45) Date de publication et mention de la délivrance du brevet: **06.09.2023**
(21) Numéro de dépôt: 17832539.5
(22) Date de dépôt: 22.12.2017
(51) Int. Cl.: H04L 65/1016, H04L 65/1073, H04L 65/1104

(54) **CLASSIFICATION ET AIGUILLAGE DE MESSAGES DE CONTRÔLE D'UNE INFRASTRUCTURE DE COMMUNICATIONS**
KLASSIFIZIERUNG UND ROUTING VON STEUERUNGSNACHRICHTEN FÜR EINE KOMMUNIKATIONSINFRASTRUKTUR
CLASSIFYING AND ROUTING CONTROL MESSAGES FOR A COMMUNICATIONS INFRASTRUCTURE

(30) Priorité: 22.12.2016 FR 1663157
(43) Date de publication de la demande: 30.10.2019
(73) Titulaire: Orange, 92130 Issy-les-Moulineaux (FR)
(72) Inventeur: CHATRAS, Bruno, 92326 Châtillon cedex (FR); MORAND, Lionel, 92326 Châtillon cedex (FR)
(86) Numéro de dépôt international: PCT/FR2017/053830
(87) Numéro de publication internationale: WO 2018/115795

(56) Documents cités:
- EP-A1- 2 285 064
- US-A1- 2008 162 705
- US-A1- 2009 262 920

## Description

### 1. Domaine de l'invention

L'invention se situe dans le domaine des infrastructures de réseaux de commande et sur les fonctions de chainage de fonctions réseaux.

### 2. Etat de la technique antérieure

Les infrastructures des réseaux fournissant des services conversationnels sur IP (en anglais *Internet Protocol*)*,* telle que la téléphonie sur IP, ou plus généralement de services IP sont en général composées d'un certain nombre d'entités de contrôle, parfois appelées serveurs d'appels dans le cas de services conversationnels, ayant pour tâche d'établir les sessions et de serveurs d'applications qui exécutent des services supplémentaires à l'établissement d'une session de base. Les infrastructures fondées sur le protocole SIP (en anglais *Session Initiation Protocol*) et en particulier l'infrastructure IMS (en anglais *IP Multimedia System*) définie par le 3GPP (en anglais *3rd Generation Partnership Project)* comptent parmi les plus connues. Dans ces infrastructures, les messages d'établissement de session, composés de paquets, sont acheminés dans une série de serveurs. Chaque serveur effectue une ou plusieurs tâches bien définies puis détermine à quel serveur faire suivre le message de contrôle jusqu'à ce qu'il atteigne le terminal du destinataire ou un serveur en charge de ce terminal. La décision d'acheminement est prise au moment du traitement du message en fonction des caractéristiques du message et de données de configuration tenant compte notamment de la topologie du réseau.

Par exemple, dans le cas de l'infrastructure IMS, lors d'un appel émis par un terminal d'un utilisateur enregistré auprès d'un serveur de type S-CSCF (en anglais *Serving Call*/*Session Control Functions*)*,* ce serveur détermine à partir du contenu du message d'établissement d'appel (SIP INVITE) si le destinataire est enregistré dans le même domaine que l'utilisateur émetteur. Si les deux utilisateurs sont dans la même infrastructure, le message d'établissement d'appel est transmis à un serveur appelé I-CSCF (en anglais *Interrogating-CSCF*) chargé de déterminer plus précisément sur quel serveur S-CSCF est enregistré le destinataire et de lui faire suivre le message. Sinon, le message d'établissement d'appel est envoyé soit directement vers un serveur de l'autre domaine, soit vers une entité d'interconnexion avec l'infrastructure du destinataire (IBCF, en anglais *Interconnect Border Control Fonction*); ce serveur d'interconnexion effectue alors un ou plusieurs traitements liés au transcodage, au filtrage/masquage de paramètres de signalisation, à l'interfonctionnement avec d'autres variantes du protocole SIP ou d'autre protocoles de signalisation, contrôle de traduction d'adresses, etc... L'entité d'interconnexion sélectionnée peut varier en fonction de l'infrastructure de destination et/ou des traitements à effectuer.

Par ailleurs, dans l'infrastructure IMS, les entités S-CSCF sont aussi en charge de l'analyse du contenu des requêtes SIP reçues pour déterminer s'il est nécessaire d'impliquer dans leur traitement un ou plusieurs serveurs d'applications. Cette analyse se fait sur la base de critères de filtrage, ou une combinaison de ces règles, appelés IFC (en anglais *Initial Filter Criteria*)*.* Ces critères sont définis dans le profil de l'utilisateur, stocké dans un serveur de données d'utilisateurs appelé HSS (en anglais *Home Subscriber System*) et récupéré par le S-CSCF au moment de l'enregistrement de l'utilisateur auprès de l'infrastructure de communications. Si le contenu de la requête SIP satisfait un des critères de filtrage ou plusieurs d'entre eux (ex : type du message, identité contenue dans le champ « From » du message, etc.), l'entité S-CSCF envoie la requête au serveur d'applications associé à ce filtre. Plusieurs critères de filtrage peuvent être définis pour un même utilisateur, chaque critère pouvant pointer vers un serveur d'applications différent.

Le document EP 2285064A1 décrit une méthode et un dispositif pour qu'un équipement utilisateur (UE) connecté à un domaine de commutation circuit (CS) puisse établir un appel SIP vers un correspondant dans un environnement IMS.

Le document US 2009/262920A1 décrit un procédé pour reprendre l'évaluation d'une liste de critères de filtrage iFC (Initial Filter Criteria) à un endroit spécifique de la liste. Deux nouveaux paramètres, iFC index et un paramètre iFC de reprise sont proposés pour mettre en oeuvre ce procédé.

Le document US 2008/162705A1 décrit une méthode consistant à instancier des critères de filtrage spécifiques pour les requêtes subséquentes d'une session. Pour certaines sessions, il n'est pas nécessaire de transmettre tous les messages d'une session à un serveur d'application donné. Le procédé permet de définir des critères permettant d'identifier des messages ou des conditions relatifs à la session pour lesquels un serveur applicatif souhaite être notifié de messages d'une session ou non.

Les inconvénients de ces infrastructures sont notamment les suivants :
- Des règles doivent être configurées et maintenues à jour sur toutes les entités S-CSCF pour leur permettre de faire suivre les messages d'établissement d'appel à une entité d'interconnexion ou non.
- Il n'est pas possible de faire passer le message d'établissement d'appel par plusieurs entités d'interconnexion, chacune en charge d'un traitement et de faire en sorte de ne le faire passer que dans ceux proposant un traitement réellement nécessaire à la communication considérée.

- Seule l'entité S-CSCF ayant accès aux critères de filtrage contenus dans le profil de l'utilisateur, il n'est pas possible d'insérer dans le chemin emprunté par les messages de contrôle des serveurs d'applications avant d'avoir atteint cette entité S-CSCF.
- Il n'est pas possible de faire passer les requêtes directement d'un serveur d'applications à un autre sans repasser par l'entité S-CSCF, ce qui créé notamment un goulot d'étranglement dans cette entité.

Un des buts de l'invention est de remédier à ces inconvénients de l'état de la technique.

### 3. Exposé de l'invention

L'invention vient améliorer la situation à l'aide d'un procédé de gestion d'une règle de classification d'un paquet d'un message de contrôle relatif à un service de communications destiné à être consommé par un terminal d'un utilisateur, ladite règle étant relative au routage dudit paquet dans une infrastructure de communications fournissant ledit service selon la revendication 1.

Le procédé de gestion consiste, à la réception d'un message de signalisation, à établir une ou plusieurs règles de classification à partir d'informations relatives à un service de communication, présentes dans le message ou bien transmises par des entités de l'infrastructure de communications. Ces règles sont ensuite mises à profit par un dispositif de l'infrastructure pour router les paquets des messages de contrôle, c'est-à-dire choisir un chemin, représenté par une suite d'entités à travers lesquelles les paquets des messages de contrôle sont écoulés pour conduire à l'établissement de la communication entre un terminal et une entité distante. Par exemple, dans le cas de l'établissement d'une communication de type Voix sur IP dans un réseau IMS entre un terminal et une entité distante, l'avantage du procédé de gestion est d'établir une règle de classification dès l'enregistrement d'un terminal, typiquement lors de l'envoi d'un message de signalisation correspondant à un message d'enregistrement *SIP Register* (en anglais Session Initiation Protocol Register). Le procédé de gestion comprend l'émission de cette règle au terminal ainsi qu'à un dispositif en charge de sélectionner le chemin, par exemple un dispositif de type P-CSCF (en anglais *Proxy Call*/*Session Control Functions*) pour les paquets relatifs aux messages de contrôle émis par le terminal et un dispositif de type IBCF (en anglais *Interconnect Border Control Function*) pour les messages de contrôle émis par l'entité distante. L'information de services obtenue, qui peut comprendre par exemple des conditions de filtrage ou des informations de gestion permettent au dispositif mettant en oeuvre le procédé de gestion, de fixer des règles de classification. L'information de services reçue peut également comprendre une règle de classification, en tant que telle, et le procédé de gestion consiste à utiliser cette règle de classification et à l'envoyer au terminal et à un dispositif d'aiguillage de façon à ce que les paquets des messages de contrôle soient acheminés conformément à la règle déterminée. Le procédé de gestion peut également être mis en oeuvre dans une infrastructure SDN (en anglais *Software Defined Networks*), auquel cas la règle de classification est avantageusement utilisée pour le routage des paquets d'un message de contrôle par les entités supportant la technologie SDN. Le contrôleur SDN peut ainsi configurer les différentes entités placées sur le chemin relatif à la règle de classification de façon à ce que ces entités disposent des informations permettant de router les paquets de contrôle conformément à la règle. Les dispositifs, le terminal et l'entité distante peuvent également être des entités virtualisées.

Selon une caractéristique particulière, l'information de service comprend un paramètre de filtrage relatif auxdites données d'identification reçues et est obtenue d'un serveur comprenant des données relatives à des utilisateurs.

Un serveur comprenant les données relatives à des utilisateurs, par exemple un serveur HSS (en anglais *Home Subscriber Server*), peut avantageusement être utilisé pour fournir des informations relatives à la classification des paquets d'un message de contrôle au dispositif de gestion. Lorsqu'un terminal d'un utilisateur souhaite se connecter à l'infrastructure de communications, il doit auparavant s'enregistrer. Un serveur, de type HSS, est le plus souvent sollicité pour fournir des données à l'équipement en charge de l'enregistrement du terminal. Un tel serveur de données gère notamment les identités des utilisateurs, des informations relatives à la sécurité ainsi que des informations relatives à la localisation de l'utilisateur. Le serveur de données des utilisateurs peut en outre avantageusement fournir des informations de services comprenant des paramètres de filtrage au dispositif de gestion en charge de l'enregistrement du terminal. Notamment, les paramètres de filtrage peuvent consister en des règles iFC (en anglais *Initial Filtering Criteria)* transmises par le serveur de données relatives aux utilisateurs (HSS).

Selon une caractéristique particulière, l'information de service comprend une information de gestion émise par une entité de gestion de l'infrastructure de communications
Une entité en charge de la gestion de l'infrastructure de communications, par exemple une entité d'administration de l'infrastructure, peut intervenir dans la classification des paquets des messages de contrôle et donc dans leur acheminement au sein de l'infrastructure. Notamment dans le cas où l'infrastructure de communications est utilisée pour assurer l'acheminement de paquets de messages de contrôle envoyés par des dispositifs d'une autre infrastructure de communications, et à destination d'une entité appartenant à une infrastructure différente de celle déployant le dispositif de gestion, des informations des gestion spécifiques peuvent être prises en compte. Dans ce cas de figure, où l'infrastructure assure le transit des messages de contrôle, un chemin spécifique pour les paquets de tels messages de contrôle peut être sélectionné. Indépendamment du profil des utilisateurs ou d'autres données utilisées pour déterminer une règle de classification, l'entité de gestion, par exemple dans le cas d'un réseau de type IMS, peut ainsi intervenir sur la classification et l'aiguillage des paquets de contrôle en fournissant des informations de service comprenant une information de gestion, au dispositif de gestion des règles de classification.

Selon une caractéristique particulière, le message de signalisation est un message d'enregistrement dudit terminal auprès de l'infrastructure de communications.

Le procédé de gestion peut être avantageusement mis en oeuvre lors de la procédure d'enregistrement du terminal à l'infrastructure de communications. Ainsi, dès l'enregistrement du terminal, c'est-à-dire dès le tout premier message émis par le terminal pour établir une session de communication, il est possible de déterminer les règles de classification. Les messages de contrôle émis par le terminal ou à destination du terminal sont alors routés suivant à des chemins relatifs aux règles de classification. Par exemple dans le cas d'une infrastructure IMS, la détermination des règles de classification est menée lors de la réception d'un message de type SIP Register.

Selon une caractéristique particulière, le message d'instruction et le message de configuration sont compris dans un même message.

Dans un mode de réalisation, un seul message peut être utilisé pour transmettre d'une part le message d'instruction comprenant la règle de classification au terminal de l'utilisateur et d'autre part l'information de configuration à un dispositif d'aiguillage. Ce message unique transmis au terminal de l'utilisateur, comportant une règle de classification, peut en effet être intercepté par un dispositif d'aiguillage, qui dans ce cas prend en compte l'information relative à la règle de classification et retransmet le message au terminal utilisateur. Ce mode de réalisation est notamment pertinent dans une infrastructure où le dispositif d'aiguillage est également un dispositif d'accès de l'infrastructure de communications (par exemple un dispositif de type P-CSCF (en anglais *Proxy Call*/*Session Control Functions))* et que le message d'instruction est un message de réponse à une demande d'enregistrement. Dans ce cas, le P-CSCF doit nécessairement recevoir la réponse à la demande d'enregistrement avant de la retransmettre au terminal. Il est dans ce cas optimal, de ne transmettre qu'un seul message, comportant la règle de classification, au terminal et au dispositif d'aiguillage qui peuvent alors exploiter, l'un et l'autre, la règle reçue. Par exemple, dans le cas d'une infrastructure IMS, l'envoi d'un seul message de type *SIP Register 200* OKcomprenant la règle d'acheminement pourra suffire pour configurer le dispositif d'aiguillage, qui pourrait être un P-CSCF, et pour informer le terminal de la réponse d'enregistrement comprenant la règle de classification.

Selon une caractéristique particulière, l'information de service est basée sur le contenu d'au moins un champ du paquet du message de contrôle.

A partir d'une information présente dans un paquet de contrôle, il est possible de déterminer une règle de classification. Notamment, l'information concernant l'identité du terminal et/ou de l'entité distante peut être utilisée pour déterminer une règle de classification. Selon le nombre de règles de classification et le degré de précision des règles de classification, il est possible de considérer plusieurs champs pour déterminer une règle de classification. Par exemple, s'il s'agit de messages de contrôle de type SIP (en anglais *Session Initiation Protocol*), les informations des champs P-Asserted identity et/ou Remote-party-Identity pourront être utilisées pour déterminer une règle de classification. Il n'existe pas de limitations quant au nombre de champs d'un paquet d'un message de contrôle pouvant être utilisés pour déterminer une règle de classification.

Selon une caractéristique particulière, l'entité de contrôle est mise en oeuvre dans une entité de gestion relative à un utilisateur.

Une entité de gestion des sessions des utilisateurs d'une infrastructure de communication peut par exemple avantageusement mettre en oeuvre le procédé de gestion d'une règle de classification. Une règle de classification étant déterminée lors de la réception d'un message de signalisation, par exemple pour enregistrer un terminal d'un utilisateur, il peut être optimal d'utiliser une entité de gestion des sessions, en charge notamment des fonctions d'enregistrement (en anglais *Registrar*)*.* L'entité de gestion des sessions communiquant avec une base de données des utilisateurs (HSS) pourra en outre utiliser des interfaces avec cette base de données dans le cas notamment où l'information de service doive être obtenue de cette base. L'utilisation de l'entité de gestion des sessions comme entité réalisant un mode de réalisation de l'invention permet ainsi d'utiliser les interfaces existantes avec les autres dispositifs de l'infrastructure de communications pour les besoins concernant la détermination d'une règle de classification. Dans un mode de réalisation particulier, l'entité de gestion des sessions est un dispositif de type S-CSCF (en anglais *Serving Call State Control Function*)*.* De façon plus générique, l'entité de gestion relative à un utilisateur peut-être une entité de gestion d'une session d'un utilisateur ou bien une entité de gestion de l'enregistrement d'un utilisateur.

Selon un deuxième aspect, l'invention concerne également un procédé d'aiguillage d'un paquet d'un message de contrôle relatif à un service de communications destiné à être consommé par un terminal d'un utilisateur selon la revendication 8.

Le procédé d'aiguillage est mis en oeuvre pour que les paquets des messages de contrôle soient acheminés au sein de l'infrastructure de communication conformément à la règle de classification déterminée par une entité de contrôle telle que par exemple le dispositif apte à enregistrer le terminal.

Le procédé d'aiguillage consiste, lors de la réception d'un paquet d'un message de contrôle, à y intégrer une donnée permettant de faire correspondre à la règle de classification, une donnée permettant l'identification d'un chemin à travers l'infrastructure de communications.

Plus précisément, le procédé d'aiguillage consiste à marquer un paquet d'un message de contrôle en fonction de la règle de classification, c'est-à-dire à modifier le paquet en ajoutant une information permettant d'acheminer les paquets du message de contrôle conformément à la règle de classification. Ce marquage permet ensuite d'une part de pouvoir transmettre le paquet à une entité, qui peut être un serveur d'appel ou un serveur d'application de l'infrastructure, et d'autre part à cette entité de choisir une entité à laquelle transmettre le paquet. Le marquage peut correspondre à l'insertion d'un paramètre de routage dans le paquet à partir duquel les différentes entités de l'infrastructure sont en mesure d'acheminer les paquets des messages de contrôle. Selon l'art antérieur, l'acheminement de messages de contrôle s'appuie sur la mise en oeuvre d'une entité à laquelle les messages de contrôle sont transmis systématiquement, cette entité retransmettant le message à une autre entité qui lui renverra le paquet une fois qu'il aura assuré le traitement dont il a la charge. Le procédé d'aiguillage, tel que décrit dans cette revendication, consiste à insérer un paramètre de routage dans le paquet qui permet aux entités de l'infrastructure de router le paquet d'un message de contrôle de proche en proche sans que le paquet ne doive transiter nécessairement plusieurs fois par une même entité.

La règle de classification peut par exemple être utilisée pour définir par exemple un en-tête ajouté au paquet du message de contrôle reçu. A partir de cet en-tête, le dispositif mettant en oeuvre le procédé d'aiguillage est apte à sélectionner une entité à qui envoyer le paquet, cette entité de réception pouvant elle-même choisir une entité à qui envoyer le paquet à partir de l'en-tête ajouté. Dans un autre mode de réalisation, le paramètre permettant le routage du paquet peut être inséré dans un autre champ du paquet, différent de l'en-tête. Le dispositif mettant en oeuvre le procédé d'aiguillage peut être spécifique aux paquets sortants, émis par le terminal utilisateur, auquel cas un autre dispositif mettant en oeuvre le procédé d'aiguillage doit assurer l'aiguillage des paquets entrants, émis par une entité distante. En fonction de certaines contraintes d'infrastructure, une seule entité peut avoir la charge de l'aiguillage des paquets entrants et sortants. Mais dans la majorité des cas, au moins deux entités sont déployées, le procédé d'aiguillage pouvant également être mis en oeuvre dans une entité de gestion des règles de classification. En outre, il est à préciser que la règle de classification déterminée pour les paquets entrants peut différer de la règle déterminée pour les paquets sortants. Les chemins des paquets des messages de contrôle eux-mêmes peuvent différer selon qu'ils concernent les paquets des messages de contrôle entrants ou les paquets des messages de contrôle sortants.

Selon une caractéristique particulière, le paramètre de routage est inséré dans un champ NSH (en anglais *Network Service Header*) de l'en-tête du paquet.

Les techniques liées au chainage de services telles que spécifiées dans le groupe de travail SFC (en anglais *Services Function Chaining*) de l'IETF (en anglais *Internet Engineering Task Force*) peuvent être avantageusement utilisées pour l'insertion du paramètre de routage déterminé en fonction de la règle de classification reçue. En particulier, l'insertion du paramètre dans un en-tête NSH (en anglais *Network Service header*) spécifié dans le document draft-ietf-sfc-nsh-10.txt permet aux routeurs en charge de router les paquets des messages de contrôle de pouvoir acheminer les paquets vers les destinataires en utilisant la donnée insérée. Ce mode de réalisation permet notamment de pouvoir utiliser une infrastructure de transport commune pour les paquets de signalisation et les paquets dits utiles, comprenant les données utiles générées par les services utilisés par les utilisateurs. Le paramètre de routage présent dans le champ NSH du paquet permet de pouvoir adapter le chemin des paquets de contrôle conformément à la détermination d'une règle de classification opérée par le dispositif de gestion.

Les différents aspects du procédé de gestion et du procédé d'aiguillage qui viennent d'être décrits peuvent être mis en oeuvre indépendamment les uns des autres ou en combinaison les uns avec les autres.

Selon un troisième aspect, l'invention concerne un dispositif de gestion d'une règle de classification d'un paquet d'un message de contrôle relatif à un service de communications destiné à être consommé par un terminal d'un utilisateur, ladite règle étant relative au routage dudit paquet dans une infrastructure de communications fournissant ledit service selon la revendication 10.

Ce dispositif, apte à mettre en oeuvre dans tous ses modes de réalisation le procédé de gestion d'une règle de classification qui vient d'être décrit, est destiné à être mis en oeuvre dans une entité de contrôle.

Selon un quatrième aspect, l'invention concerne également un dispositif d'aiguillage d'un paquet d'un message de contrôle relatif à un service de communications destiné à être consommé par un terminal d'un utilisateur, mis en oeuvre dans une infrastructure de communications fournissant ledit service selon la revendication 11.

Ce dispositif est apte à mettre en oeuvre dans tous ses modes de réalisation le procédé d'aiguillage qui vient d'être décrit.

Selon une caractéristique particulière, le dispositif d'aiguillage est mis en oeuvre dans une entité d'accès de l'infrastructure de communications.

L'aiguillage des paquets d'un message de contrôle a pour objet de faire en sorte de sélectionner un chemin spécifique à ces paquets en fonction de la règle de classification reçue d'un dispositif de gestion et du paramètre de routage inséré dans le paquet du message de contrôle. Pour les paquets entrants et les paquets sortants, il est donc avantageux que le dispositif d'aiguillage soit également une entité d'accès de l'infrastructure de communications. Les paquets des messages de contrôle sortants, émis par le terminal, sont le plus souvent acheminés vers un dispositif d'accès par défaut. Ce dispositif d'accès, à partir de la règle de classification reçue dans le message de configuration, est apte à acheminer les paquets vers l'entité suivante conformément au paramètre de routage déterminé et de sa configuration de routage. De la même façon, pour les paquets dits entrants, un dispositif d'interconnexion de l'infrastructure de communication avec d'autres infrastructures, par exemple administrées par d'autres entités d'administration, peut avantageusement comprendre les modules d'un dispositif d'aiguillage. Ainsi, dans l'infrastructure de communications, les dispositifs d'accès à l'infrastructure, s'ils sont également en charge de l'aiguillage des paquets, permettent que toutes les entités en charge de l'acheminement des paquets, mettent à profit le paramètre de routage inséré par les dispositifs d'accès pour l'acheminement des paquets. Il est à noter que les modules du dispositif d'aiguillage peuvent être mis en oeuvre dans un seul dispositif d'accès, pour les paquets des messages entrants et sortants, en fonction de l'infrastructure de l'infrastructure de communication et des options de déploiement retenues par un gestionnaire assurant l'administration de l'infrastructure de communications. Dans l'exemple d'un réseau de type IMS, les modules d'un dispositif d'aiguillage peuvent être mis en oeuvre dans un équipement de type P-CSCF (en anglais *Proxy Call State Control Fonction),* un équipement de type IBCF (en anglais *Internet Border Control Fonctions)* voire dans un équipement de type S-CSCF (en anglais *Serving Call State Control Fonction).* L'entité d'accès peut par exemple être un routeur ou une passerelle.

Ainsi dans le cas où un S-CSCF intègre les modules d'un dispositif de gestion d'une règle de classification, il peut également intégrer les modules d'un dispositif d'aiguillage. Dans ce mode de réalisation, une seule entité est utilisée pour la gestion de la règle de classification et l'aiguillage de paquets de message de contrôle classification et l'aiguillage de paquets de message de contrôle.

Selon un cinquième aspect, l'invention concerne également un système de gestion d'une règle de classification selon la revendication 12.

Selon un sixième aspect, l'invention concerne un programme d'ordinateur selon la revendication 13.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tel que mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, le support d'informations peut être un circuit intégré dans lequel les programmes respectifs sont incorporés, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante de modes de réalisation particuliers de l'invention, donnés à titre de simples exemples illustratifs et non limitatifs, et des dessins annexés, parmi lesquels :
- la figure 1 présente de façon schématique selon l'art antérieur une infrastructure d'un plan de contrôle d'un réseau de communications,
- la figure 2 présente un exemple d'infrastructure d'un plan de contrôle d'un réseau de communications mettant en oeuvre le procédé de gestion et le procédé d'aiguillage, selon un mode de réalisation de l'invention,
- la figure 3 présente un exemple de mise en oeuvre des différentes étapes du procédé de gestion d'une règle de classification et du procédé d'aiguillage, selon un mode de réalisation de l'invention,
- la figure 4 présente un exemple de structure d'un dispositif de gestion d'une règle de classification, selon un mode de réalisation de l'invention,
- la figure 5 présente un exemple de structure d'un dispositif d'aiguillage d'un paquet d'un message de contrôle, selon un mode de réalisation de l'invention.

### 5. Description détaillée d'au moins un mode de réalisation de l'invention

Dans la suite de la description, on présente des exemples de plusieurs modes de réalisation de l'invention se basant sur un plan de contrôle d'une infrastructure IMS, mais l'invention s'applique également à d'autres types d'infrastructures de communications dans lesquels des messages de contrôle sont transmis entre des entités, permettant notamment l'établissement d'une communication entre un ou plusieurs terminaux clients et une ou plusieurs entités distantes. Il est à noter que les terminaux clients et les entités distantes peuvent être gérés par une même infrastructure de communications ou par des infrastructures de communications distinctes. Lorsqu'un terminal ou une entité est gérée par une infrastructure, cela signifie que le terminal ou l'entité est enregistrée auprès d'une entité appartenant à cette infrastructure. Une infrastructure de communications peut également assurer l'acheminement de messages de contrôle d'entités qu'elle ne gère pas. Dans ce cas, l'infrastructure de communications est considérée comme une infrastructure de transit pour ces messages de contrôle.

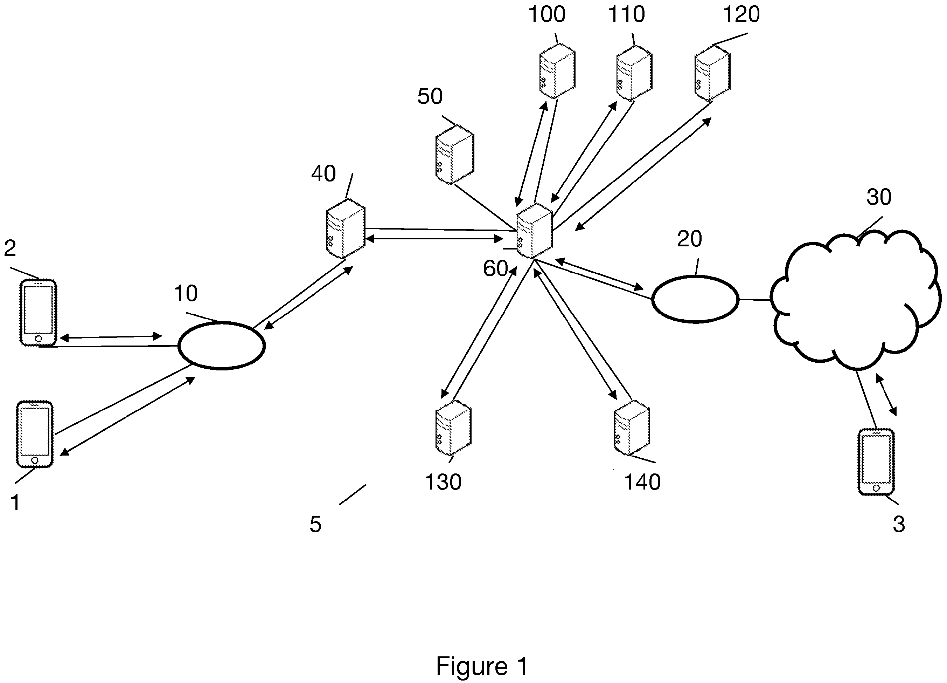

On se réfère tout d'abord à la **figure 1** qui présente de façon schématique, selon l'art antérieur, une infrastructure 5 d'un plan de contrôle d'un réseau de communications. Ce plan de contrôle est composé d'entités parmi lesquelles il est possible de distinguer les entités de contrôle, en charge d'établir les communications, aussi appelés serveurs d'appels, et les serveurs d'applications qui exécutent des services supplémentaires à l'établissement d'un appel. Sur la figure 1, les entités de contrôle sont les entités 40, 50, 60, 20 tandis que les serveurs d'applications sont les serveurs 100, 110, 120, 130, 140. Les messages de contrôle nécessaires notamment à l'établissement de communications, transitent par une séries d'entités et de serveurs effectuant chacun certaines tâches jusqu'à ce qu'ils atteignent le dispositif terminal 3, ou un serveur relatif à ce terminal 3, avec lequel un dispositif 1 souhaite initier une communication. Dans le cas d'une communication inter-domaine, c'est-à-dire entre deux infrastructures de communications distinctes, il est probable qu'un message de contrôle soit envoyé par l'entité S-CSCF 60 vers une entité de type IBCF 20. Les messages de contrôle peuvent être par exemple des messages d'invitation (SIP invite dans les réseaux IMS), des messages d'acquittement, des messages de déconnexion, des messages permettant d'indiquer des paramètres de communication. Le terminal 1, connecté à un équipement d'accès 10 transmet un message de contrôle à une entité par défaut, le P-CSCF 40, qui transmet le message à l'entité S-CSCF 60. A partir des paramètres du message de contrôle, et grâce à des informations fournies par le serveur HSS 50 lors de l'envoi d'un message de signalisation, par exemple d'enregistrement, du terminal 1 à l'entité S-CSCF 60, le S-CSCF 60 détermine les serveurs d'applications à solliciter. Si plusieurs serveurs d'applications parmi 100, 110, 120, 130, 140 doivent être sollicités, le message de contrôle doit toujours être redirigé vers l'entité S-CSCF 60 entre deux sollicitations de serveurs d'applications. Un message de contrôle envoyé par le terminal 1, s'il doit être traité par les serveurs 100, 110, 140 suivra le chemin suivant : le terminal 1 transmet le message à l'équipement d'accès 10, qui l'envoie à l'entité P-CSCF 40, qui le transmet à l'entité S-CSCF 60, qui l'envoie au serveur 100, qui le retransmet à l'entité S-CSCF 60, qui l'envoie au serveur 110, qui le retransmet à l'entité S-CSCF 60, qui l'envoie au serveur 130 qui le retransmet à l'entité S-CSCF 60, qui le transmet à l'entité IBCF 20 s'il s'agit d'un message de contrôle relatif à une communication inter-domaine avec un terminal 3 appartenant au domaine 30. Selon l'art antérieur, l'entité S-CSCF 60 représente un point névralgique de l'architecture puisqu'elle assure le routage des messages de contrôle entre les serveurs d'applications de l'infrastructure de communications 5 mais aussi pour accéder à l'infrastructure du domaine 30.

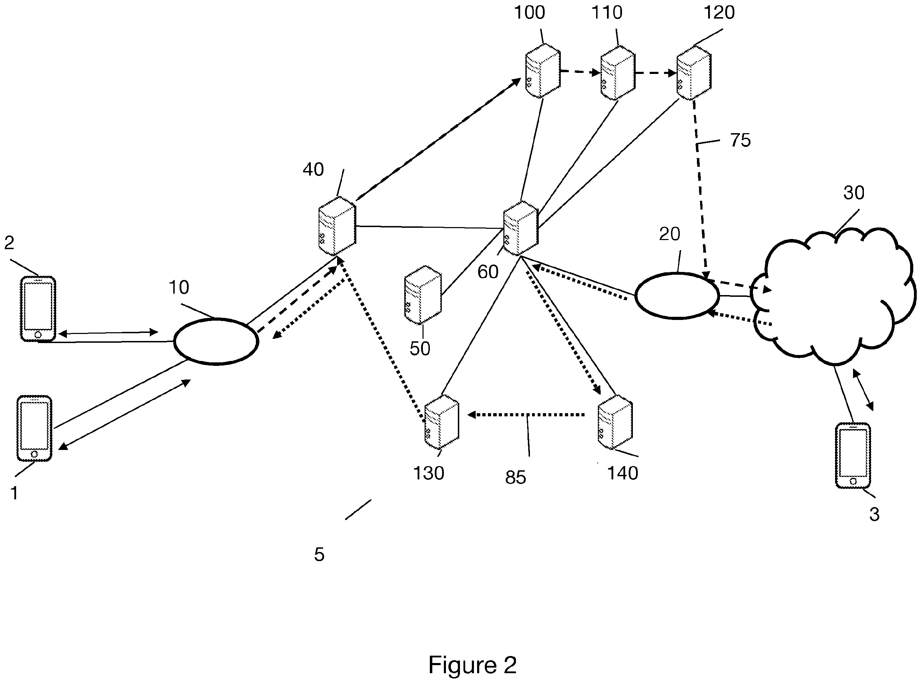

On se réfère ensuite à la **figure 2** qui présente un exemple d'infrastructure d'un plan de contrôle d'un réseau de communications mettant en oeuvre le procédé de gestion et le procédé d'aiguillage, selon un mode de réalisation de l'invention. Les entités présentes dans cette figure 2 sont les mêmes que celles décrites dans la figure 1. Certaines entités de l'infrastructure intègrent en outre des capacités permettant de mettre en oeuvre le procédé de gestion d'une règle de classification selon un mode de réalisation et certaines entités de l'infrastructure 5 mettent en oeuvre le procédé d'aiguillage selon un mode de réalisation. Les terminaux 1 et 2 s'enregistrent à l'infrastructure 5 tandis que le terminal 3 s'enregistre à une autre infrastructure 30. Les terminaux 1, 2 d'une part et 3 d'autre part ne sont donc pas gérés par la même infrastructure. Dans ce mode de réalisation, il est considéré que l'entité P-CSCF 40 met en oeuvre un procédé d'aiguillage pour les paquets des messages de contrôle sortants, émis par le terminal 1 à destination du terminal 3. L'entité IBCF 20 met en oeuvre le procédé d'aiguillage selon un mode de réalisation de l'invention pour les paquets des messages de contrôle entrants, émis par le terminal 3 à destination du terminal 2. Dans un autre mode de réalisation, le procédé d'aiguillage des paquets des messages de contrôle entrants est mis en oeuvre dans l'entité S-CSCF 60.

Selon un mode de réalisation de l'invention, l'entité S-CSCF 60 a déterminé, lors de l'enregistrement du terminal 1, grâce à l'envoi d'un message de signalisation spécifique (enregistrement) une règle de classification des paquets d'un message de contrôle émis par le terminal 1. L'entité S-CSCF 60 a transmis cette règle au terminal 1 dans un message d'instruction, qui peut être un message de réponse d'enregistrement, ainsi qu'aux entités d'aiguillage 40 et 20 grâce à l'envoi d'un message de configuration. L'entité S-CSCF 60 a la possibilité d'établir autant de règles de classification que nécessaire pour l'aiguillage des messages de contrôle. Les serveurs d'application 100, 110, 120, 130, 140 assurent des fonctions applicatives spécifiques telles que des fonctions de traduction des numéros, de continuité de service VCC (en anglais Voice Call Continuity)...

Le S-CSCF 60, en charge de la détermination des règles de classification, construit par exemple trois règles de classification pour les paquets des messages de contrôle sortants et deux règles pour les paquets des messages de contrôle entrants. A la réception de paquets d'un message de contrôle correspondant à une règle, les entités d'aiguillage 20, 40 font en sorte que les paquets du message soient routés de proche en proche par les entités et serveurs du chemin sélectionné en fonction de la règle. Dans la suite du document, une entité signifie indifféremment les serveurs d'appels et les serveurs d'applications. Dans le cas où des techniques de chaînage de fonctions réseau sont mises en oeuvre, le dispositif d'aiguillage peut configurer un champ des paquets ou bien ajouter un en-tête au paquet, tel qu'un en-tête NSH (en anglais *Network Service Header*) spécifié à l'IETF dans le document draft-ietf-sfc-nsh (version 10, septembre 2016). Ainsi, chaque entité et serveur sur le chemin supportant les spécifications NSH au sein de l'infrastructure, est en mesure de transmettre le paquet à l'entité suivante dans la chaîne en interprétant l'en-tête ajouté. Dans le mode de réalisation décrit ci-dessous, un en-tête est ajouté aux paquets des messages de contrôle.

La règle de classification R1 est sélectionnée si un paquet d'un message de contrôle sortant vérifie deux conditions a et b.

La règle de classification R2 est sélectionnée si un paquet d'un message de contrôle sortant vérifie une condition a.

La règle de classification R3 est sélectionnée si un paquet d'un message de contrôle sortant vérifie une condition b.

La règle de classification R4 est sélectionnée si un paquet d'un message de contrôle entrant vérifie une condition c.

La règle de classification R5 est sélectionnée si un paquet d'un message de contrôle entrant vérifie une condition d.

Les conditions a, b, c, d, e sont aussi appelées informations de service. Ces informations peuvent comprendre des « paramètres de filtrage » qui peuvent être de différents types. Une condition peut correspondre à une valeur du champ d'un paquet d'un message de contrôle. Par exemple, la valeur du champ P-asserted-Identity et/ou du champ Remote-party-Identity pourra être utilisée pour déterminer une règle de classification.
A la règle de classification R1, correspond un en-tête de paquet H1,
A la règle de classification R2, correspond un en-tête de paquet H2,
A la règle de classification R3, correspond un en-tête de paquet H3,
A la règle de classification R4, correspond un en-tête de paquet H4,
A la règle de classification R5, correspond un en-tête de paquet H5.

A l'en-tête de paquet H1, correspond le chemin passant par l'entité P-CSCF 40, le serveur 100, le serveur 110, le serveur 120, l'entité IBCF 20. Ce chemin 75 est représenté sur la figure 2.

A l'en-tête de paquet H2, correspond le chemin passant par l'entité P-CSCF 40, le serveur 120, l'entité IBCF 20. Ce chemin pour des soucis de clarté n'est pas représenté sur la figure 2.

A l'en-tête de paquet H3, correspond le chemin passant par l'entité P-CSCF 40, l'entité IBCF 20. Ce chemin pour des soucis de clarté n'est pas représenté sur la figure 2.

A l'en-tête de paquet H4, correspond le chemin passant par l'entité IBCF 20, le serveur 130, l'entité P-CSCF 40. Ce chemin pour des soucis de clarté n'est pas représenté sur la figure 2.

A l'en-tête de paquet H5, correspond le chemin passant par l'entité IBCF 20, le serveur 140, le serveur 130, l'entité P-CSCF 40. Ce chemin 85 est représenté sur la figure 2.

Dans un autre mode de réalisation, le terminal 1 est en capacité de configurer le champ d'un paquet ou d'ajouter un en-tête à un paquet correspondant à la règle de classification reçue dans un message d'instruction, ce qui donne l'avantage de pouvoir déterminer un chemin à partir du terminal 1. Ce mode de réalisation donne la possibilité, si besoin, de choisir un équipement d'accès et/ou une entité P-CSCF différente selon le champ configuré ou l'en-tête ajouté.

Dans un autre mode de réalisation, les conditions obtenues pour le terminal 1 parmi les conditions a, b, c, d, e peuvent être transmises par un serveur HSS 50 à l'entité S-CSCF 60. L'entité S-CSCF 60 détermine alors une règle parmi les règles R1, R2, R3, R4, R5 à partir des conditions obtenues du HSS pour le terminal 1. Dans un autre mode de réalisation, le serveur HSS 50 détermine lui-même, pour le terminal 1, la règle parmi les règles R1, R2, R3, R4, R5 qu'il transmet ensuite à l'entité S-CSCF 60.

Dans un mode de réalisation, l'entité S-CSCF 60 peut transmettre aux dispositifs d'aiguillage 20 et 40 l'ensemble des règles de classification. Les dispositifs 20 et 40, sélectionnent la règle pour les paquets d'un message de contrôle reçu en fonction des informations présentes dans les règles reçues. Les étapes de configuration d'un champ du paquet ou de l'ajout d'un en-tête restent identiques.

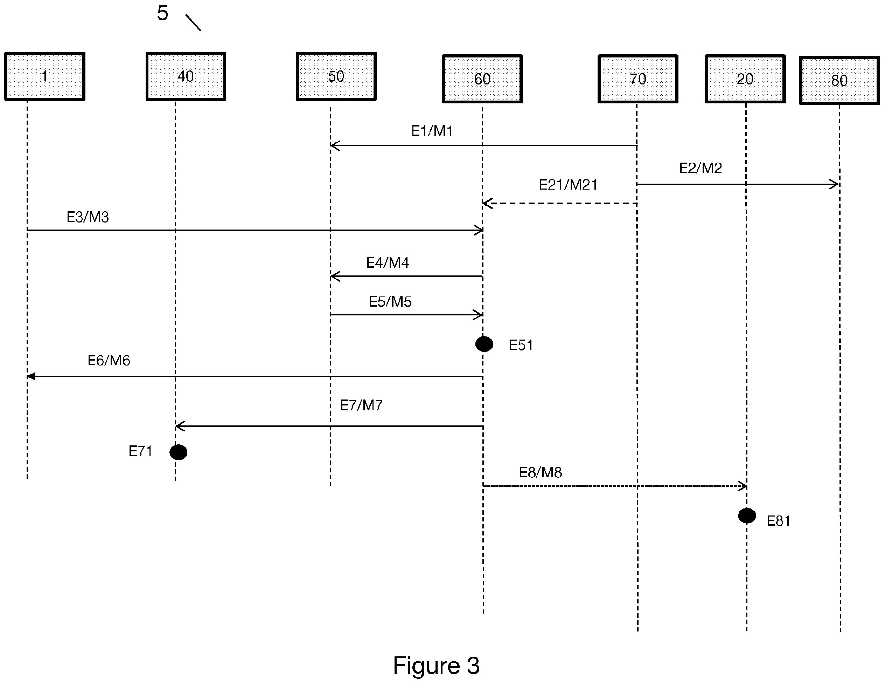

On se réfère ensuite à la **figure 3** qui présente un exemple de mise en oeuvre des différentes étapes du processus de gestion d'une règle de classification, selon un mode de réalisation de l'invention.

Les entités 1, 40, 50, 60 et 20 de la figure 3 sont respectivement un terminal, une entité P-CSCF mettant en oeuvre le procédé d'aiguillage, un serveur HSS, une entité S-CSCF mettant en oeuvre le procédé de gestion d'une règle de classification et une entité IBCF mettant en oeuvre le procédé d'aiguillage. Les entités 70 et 80 sont respectivement une entité d'administration de l'infrastructure de communications et une entité de contrôle d'une infrastructure SDN. Ces entités sont déployées au sein d'une infrastructure de communications 5. Dans ce mode de réalisation, il est considéré que les paquets sont acheminés par les routeurs de l'infrastructure, non représentés sur la figure, pour que les entités (P-CSCF, S-CSCF, I-CSCF, IBCF...) et les serveurs d'applications exécutent des services tels que des services d'aiguillage, des traitements applicatifs et des fonctions avancées de services notamment. A des fins de clarté, il n'y a pas de serveurs d'applications représentés sur cette figure. Le paramètre de routage est cependant mis à profit par des routeurs de l'infrastructure pour acheminer les paquets des messages de contrôle, par exemple selon les technologies SDN, vers les entités et les serveurs d'applications. Dans un autre mode de réalisation, les entités et les serveurs d'applications peuvent eux-mêmes router les paquets en utilisant le paramètre de routage inséré par le dispositif d'aiguillage.

Lors d'une étape E1, l'entité d'administration 70 envoie un message M1 comprenant les données des profils des utilisateurs de l'infrastructure au serveur HSS 50. Ces données seront ensuite utilisées pour déterminer les règles de classification. Ces données comprennent des identités des utilisateurs ainsi que des informations concernant la souscription à des services des utilisateurs.

Lors d'une étape E2, l'entité d'administration 70 transmet un message M2 de configuration à l'entité de contrôle SDN 80. Ce message de configuration comprend des règles d'acheminement permettant ensuite à chaque entité de l'infrastructure, une fois qu'elles auront reçu ces informations de l'entité de contrôle SDN 80, de connaître l'entité ou le serveur auquel un paquet doit être transmis. Cet acheminement est réalisé en s'appuyant sur un paramètre de routage configuré par un dispositif d'aiguillage de l'infrastructure. Les technologies SDN sont utilisées dans ce mode de réalisation mais il est possible d'envisager d'autres techniques de configuration. Les messages de configuration envoyés par l'entité de contrôle SDN 80 aux entités en charge de l'acheminement des paquets ne sont pas représentés sur la figure 3.

Lors d'une étape E21, l'entité de gestion 70 envoie un message M21 comprenant des informations de gestion à l'entité S-CSCF 60. Ces informations de gestion, envoyées par l'entité de gestion 70 correspondent par exemple à informations de gestion de paquets de messages de contrôle en transit dans l'infrastructure. Dans ce cas, les entités à l'origine et de destination des messages de contrôle ne sont enregistrés auprès de l'infrastructure de communications mettant en oeuvre le procédé de gestion au moment où les informations de gestion sont transmises par l'entité 70. Il est également possible pour l'entité de gestion de transmettre ces informations de gestion à tout moment, notamment pour intervenir sur les règles de classification déterminées et l'aiguillage des paquets de message de contrôle. Ce message est optionnel. En effet, dans un mode de réalisation, l'entité de gestion de transmet pas d'informations de gestion et les règles de classification sont déterminées sans informations provenant de l'entité de gestion 70.

Lors d'une étape E3, le terminal 1 s'enregistre auprès de l'entité S-CSCF 60 par l'envoi d'un message M3. Ce message M3 correspond, dans une infrastructure IMS, à un message de type SIP REGISTER. Ce message de signalisation est alors un message d'enregistrement.

Lors d'une étape E4, le S-CSCF 60 transmet un message M4 au serveur HSS 50 correspondant à une demande d'information permettant de déterminer une règle de classification pour le terminal 1. L'entité S-CSCF 60 doit insérer dans le message M4 une information sur l'identifiant du terminal 1 reçue dans le message M3. Un message basé sur le protocole Diameter (IETF RFC https://tools.ietf.org/html/rfc6733) peut être transmis. Notamment, un message de type SAR (en anglais *Server Assignment Request*) peut être avantageusement utilisé lors de cette étape E4. Il est à noter que le S-CSCF 60 peut échanger plusieurs messages avec le HSS notamment pour l'authentification du terminal 1. Notamment, l'étape E4 se déroule une fois que l'authentification du terminal 1, non représentée sur la figure, a été exécutée.

Lors d'une étape E5, le serveur HSS 50 transmet un message M5 à l'entité S-CSCF 60 en réponse au message M4 reçu. Ce message M5 comprend des informations de service relatives aux paquets des messages de contrôle. Dans un autre mode de réalisation, les informations de service correspondent à des règles de classification et le serveur HSS 50 transmet donc des règles de classification à l'entité S-CSCF 60. Le message M5 pourra correspondre à un message de type SAA (en anglais *Server Assignment Answer*) modifié si besoin pour intégrer, selon le mode de réalisation retenu, des règles de classification.

Lors d'une étape E51, l'entité S-CSCF 60 détermine une règle de classification en fonction des informations de service obtenues à l'étape E5 et des informations de gestion possiblement obtenues lors de l'étape E21. Selon, les modes de réalisation, il peut s'agir de mémoriser les règles de classification reçues ou bien d'élaborer des règles de classification en fonction de règles, telles que des règles iFC, reçues du serveur HSS 50 et des informations de gestion reçues de l'entité de gestion 70. Dans un autre mode de réalisation, le serveur S-SCSF 60 utilise en outre les informations des paquets des messages de contrôle pour déterminer les règles de classification.

Lors d'une étape E6, l'entité S-CSCF 60 envoie un message d'instruction M6, en réponse à la demande d'enregistrement, au terminal 1. Ce message M6 comprend une règle de classification déterminée par l'entité S-CSCF 60. Dans un mode de réalisation, le terminal 1 utilise la règle de classification reçue pour marquer les paquets des messages de signalisation émis afin qu'ils intègrent un paramètre de routage (une configuration d'un champ des paquets ou l'ajout d'un en-tête aux paquets) permettant d'acheminer les paquets suivant un chemin déterminé à partir du paramètre intégré. Les entités de l'infrastructure sur le chemin déterminé à partir du paramètre de routage du paquet et des messages de configuration envoyés par l'entité de contrôle SDN 80 (non illustrés), sont aptes à acheminer les paquets des messages de contrôle au sein de l'infrastructure. Dans ce mode de réalisation, le terminal 1 met en oeuvre le procédé d'aiguillage des paquets. Dans un autre mode de réalisation, notamment si le terminal 1 n'est pas apte à mettre en oeuvre le procédé d'aiguillage, le terminal ignore la règle de classification reçue.

Le message M6 envoyé peut correspondre à un message de type SIP REGISTER 200 OK modifié pour comprendre une règle de classification.

Lors d'une étape E7, l'entité S-CSCF 60 envoie à l'entité P-CSCF 40 un message de configuration M7 comprenant la règle de classification qu'elle a déterminée. Le message M7 est un message de configuration à partir duquel l'entité P-CSCF 40 met en oeuvre un procédé d'aiguillage consistant à mettre à jour un champ des paquets d'un message de contrôle ou à ajouter un en-tête à ces paquets, par exemple un en-tête de type NSH. Le P-CSCF 40 assure la fonction d'aiguillage si le terminal 1 n'a pas inséré un paramètre de routage dans le paquet émis, consistant par exemple à insérer un en-tête. Le P-CSCF 40 peut également assurer la fonction d'aiguillage dans le cas où il souhaite assurer cette fonction et ne fait pas confiance au paramètre de routage inséré par le terminal 1, dans le cas où le terminal 1 met en oeuvre le procédé d'aiguillage. L'entité assurant la gestion de l'infrastructure de communications peut en effet décider de faire supporter le procédé d'aiguillage par des entités dont elle assure l'administration et sur lesquelles il lui est possible d'intervenir. Dans ce cas, le P-CSCF 40 supprime le paramètre de routage inséré par le terminal 1 et insère son propre paramètre de routage.

Le message M7, dans un autre mode de réalisation, n'est pas un message spécifique. Le message M6 envoyé par l'entité S-CSCF 60 au terminal 1 est intercepté par l'entité P-CSCF 40. L'entité P-CSCF 40 exploite alors la règle de classification présente dans le message M6 avant de le renvoyer au terminal. Un seul message M6 est alors transmis par l'entité S-CSCF 60 à destination du terminal 1. Ce message est intercepté, puis retransmis au terminal 1, par l'entité P-CSCF 40.

Lors d'une étape E71, l'entité P-CSCF 40 exécute plusieurs tâches permettant de faire suivre aux messages de contrôle un chemin dans l'infrastructure de communications. A partir de la règle de classification obtenue lors de l'étape E7, l'entité P-CSCF 40 détermine un paramètre de routage qui peut correspondre par exemple à une valeur d'un en-tête qui est ajouté aux paquets des messages de contrôle ou bien à la configuration d'un champ des paquets. L'entité P-CSCF 40 transmet ensuite les paquets des messages de contrôle à une entité de l'infrastructure de communications. Pour réaliser cela, le P-CSCF 40 peut utiliser le paramètre de routage qu'il a déterminé et inséré au paquet ainsi que des informations de configuration reçues par exemple du contrôleur SDN 80 s'il s'agit d'une architecture SDN. Tout autre type de configuration lui permettant d'associer le paramètre de routage inséré à une entité à qui transmettre les paquets des messages de contrôle peut être utilisé. La transmission des messages de contrôle au sein de l'infrastructure n'est pas représentée sur la figure 3.

Lors d'une étape E8, l'entité S-CSCF 60 transmet un message de configuration M8 à l'entité IBCF 20, le message comprenant une règle de classification. Ce message permet à l'entité IBCF 20 d'acheminer les paquets des messages de contrôle entrants. Ce message, dans un mode de réalisation où l'entité S-CSCF 60 met en oeuvre un procédé d'aiguillage des paquets des messages de contrôle entrants, est optionnel. Dans ce mode de réalisation, l'entité IBCF 20 transmet alors tous les paquets des messages de contrôle entrants à l'entité S-CSCF 60 qui met en oeuvre le procédé d'aiguillage. Les paquets des messages de contrôle entrants proviennent d'une infrastructure de communication distincte de l'infrastructure 5 et sont destinés à des entités de l'infrastructure 5 ou à des entités appartenant à encore une autre entité, différente de l'entité émettrice, l'infrastructure 5 assurant alors une fonction de transit pour ces paquets des messages de contrôle.

Lors de l'étape E81, l'entité IBCF 20 exécute des tâches similaires à celles exécutées par l'entité P-CSCF 40 lors de l'étape E71. L'entité IBCF 20 exécute ces tâches pour les paquets entrants tandis que l'entité P-CSCF exécute les tâches pour les paquets sortants. Dans le cas où l'entité S-CSCF 60 met en oeuvre le procédé d'aiguillage, elle exécute également les tâches relatives à l'étape E81.

Les entités de l'infrastructure de contrôle mises en oeuvre dans la figure 3 peuvent être déployées sous la forme de dispositifs matériels ou bien sous la forme d'instances virtualisées, plusieurs instances virtualisées pouvant être instanciées dans un même dispositif physique. Le terme « entité » utilisé dans les figures peut donc être remplacé par « instance virtualisée » dans le cas où l'infrastructure de contrôle est déployée sous une forme virtualisée, ou bien « dispositif » s'il s'agit d'équipements physiques. Il est en outre à noter que les entités représentées sur la figure 3 peuvent être plus diverses. Notamment dans certaines infrastructures de communications, des entités en charge de fonctions notamment de filtrage ou de sécurité peuvent être mises en oeuvre dans une infrastructure de communications 5. Ainsi des fonctions liées aux interceptions légales ou au filtrage de certains paramètres doivent parfois être instanciées via le déploiement d'entités spécifiques entre les entités P-CSCF 40 et S-CSCF 60 d'une part et IBCF 20 et S-CSCF 60 d'autre part. Ces entités interviennent alors dans l'établissement du service de communications et font partie du chemin suivi par les paquets des messages de contrôle, au même titre que les entités représentées sur la figure 3.

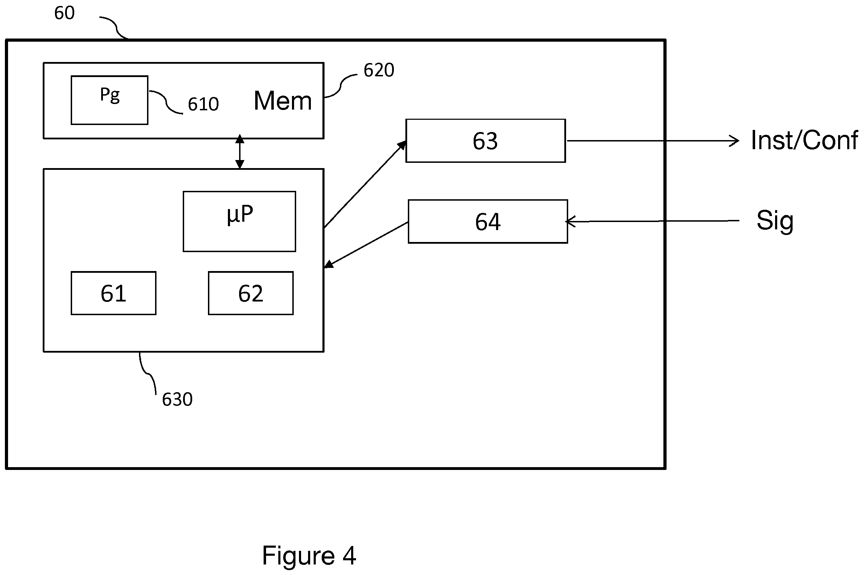

En relation avec la **figure 4****,** on présente maintenant un exemple de structure d'un dispositif de gestion d'une règle de classification, selon un mode de réalisation de l'invention.

Le dispositif 60 de gestion d'une règle de classification met en oeuvre le procédé de gestion d'une règle de classification, dont différents modes de réalisation viennent d'être décrits.

Par exemple, le dispositif 60 comprend une unité de traitement 630, équipée par exemple d'un microprocesseur µP, et pilotée par un programme d'ordinateur 610, stocké dans une mémoire 620 et mettant en oeuvre le procédé de gestion selon l'invention. A l'initialisation, les instructions de code du programme d'ordinateur 610 sont par exemple chargées dans une mémoire RAM, avant d'être exécutées par le processeur de l'unité de traitement 630.

Un tel dispositif 60 comprend :
- un récepteur 64, apte à recevoir un message de signalisation (Sig) d'un terminal comprenant des données d'identification d'un utilisateur
- un émetteur 63, apte à émettre
   - un message d'instruction (Inst) comprenant ladite règle de classification déterminée à destination dudit terminal,
   - un message de configuration (Conf) comprenant ladite règle de classification à destination d'au moins un dispositif d'aiguillage de l'au moins un paquet.
- un module d'obtention 61 agencé pour obtenir au moins une information relative au service de communication, dite information de service,
- un module de détermination 62 agencé pour déterminer ladite règle de classification dudit paquet en fonction de de l'information de service obtenue, la règle étant utilisée pour l'aiguillage dudit paquet dans l'infrastructure de communications.

Les modules décrits en relation avec la figure 4 peuvent être des modules matériels ou logiciels.

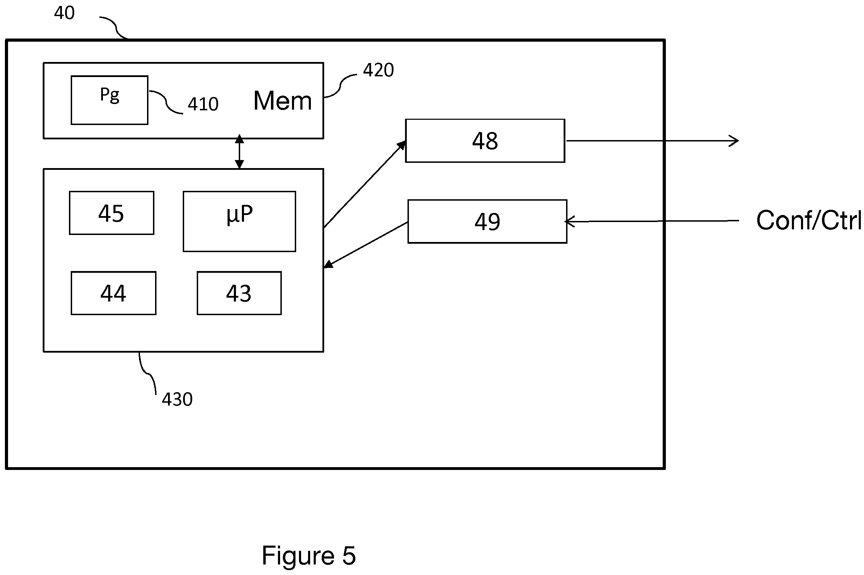

En relation avec la **figure 5****,** on présente maintenant un exemple de structure d'un dispositif d'aiguillage d'un paquet d'un message de contrôle, selon un mode de réalisation de l'invention.

Le dispositif 40 d'aiguillage d'un paquet d'un message de contrôle met en oeuvre le procédé d'aiguillage d'un paquet d'un message de contrôle, dont différents modes de réalisation viennent d'être décrits.

Par exemple, le dispositif 40 comprend une unité de traitement 430, équipée par exemple d'un microprocesseur µP, et pilotée par un programme d'ordinateur 410, stocké dans une mémoire 420 et mettant en oeuvre le procédé de d'aiguillage selon l'invention. A l'initialisation, les instructions de code du programme d'ordinateur 410 sont par exemple chargées dans une mémoire RAM, avant d'être exécutées par le processeur de l'unité de traitement 430.

Un tel dispositif 40 comprend :
- un récepteur 49, apte à recevoir :
   - un message de configuration (Conf) comprenant une règle de classification,
   - un paquet d'un message de contrôle (Ctrl),
- un module de détermination 43 agencé pour déterminer un paramètre de routage en fonction de la règle de classification contenue dans le message de configuration reçu,
- un module d'insertion 44 agencé pour insérer le paramètre de routage déterminé dans un champ dudit paquet,
- un module de sélection 45 agencé pour sélectionner une entité vers laquelle émettre ledit paquet, en fonction du paramètre de routage inséré,
- un émetteur 48, apte à émettre ledit paquet à destination de l'entité sélectionnée.

Les modules décrits en relation avec la figure 5 peuvent être des modules matériels ou logiciels. Le dispositif d'aiguillage 40 qui vient d'être décrit est apte à acheminer les paquets de signalisation sortants, selon la figure 2. Le dispositif d'aiguillage 20, apte à aiguiller les paquets des messages de signalisation entrants, présente la même structure que le dispositif 40.

Les exemples de réalisation de l'invention qui viennent d'être présentés ne sont que quelques-uns des modes de réalisation envisageables. Ils montrent que l'invention permet d'utiliser des techniques liées au chainage de fonctions, notamment spécifiées à l'IETF dans le document RFC 7665 dans un plan de contrôle pour le besoin d'acheminement de messages de contrôle. Les besoins en termes de techniques de chaînage de fonctions et la mise en oeuvre de ces techniques dans un plan de contrôle d'une infrastructure de communications sont décrites dans ce document. Dans une telle infrastructure, les terminaux doivent s'enregistrer afin de pouvoir être joints mais aussi pour initier des communications. L'invention consiste, dans un mode de réalisation, à profiter de la phase d'enregistrement d'un terminal pour lui associer une règle de classification, à partir de laquelle il est ensuite possible d'aiguiller les messages de contrôle entre les entités de l'infrastructure, y compris les serveurs d'appels et les serveurs d'application, de l'infrastructure.

Dans un autre mode de réalisation, le message de signalisation reçu par le dispositif de gestion n'est pas un message d'enregistrement d'un terminal mais correspond à un message de contrôle, qui est acheminé conformément à une règle de classification déterminée à partir d'une information de service. L'information de service peut par exemple provenir d'un serveur HSS. Dans ce mode de réalisation, le dispositif de gestion, à la réception d'un message de contrôle, détermine une règle de classification et transmet cette règle à un dispositif d'aiguillage. Dans encore un autre mode de réalisation, le dispositif de gestion comprend un dispositif d'aiguillage et met en oeuvre les étapes des procédés de gestion et d'aiguillage. Dans ce mode de réalisation, à la réception de paquets d'un message de contrôle, le dispositif de gestion les achemine sur un chemin fixé en fonction de la règle de classification déterminée.

Les solutions offertes dans l'art antérieur reposent le plus souvent sur une infrastructure en forme d'étoile où un dispositif, en l'espèce le S-CSCF pour une infrastructure IMS, assure l'acheminement des messages de contrôle entre les entités. Ceci est réalisé si besoin en transitant plusieurs fois par le dispositif S-CSCF, conduisant à un routage non optimal et à une consommation des ressources, comprenant les liens d'interconnexion et les capacités du dispositif S-CSCF, inconvénients éliminés par l'invention. Les modes de réalisation susmentionnés sont destinés à être des exemples utiles pour comprendre l'invention. La présente invention n'est définie que par les revendications annexées.

## Revendications

1. Procédé de gestion d'une règle de classification d'un paquet d'un message de contrôle relatif à un service de communications destiné à être consommé par un terminal (1) d'un utilisateur, ladite règle étant relative au routage dudit paquet dans une infrastructure (5) de communications fournissant ledit service et comprenant des entités à travers lesquelles le paquet est acheminé, le procédé étant mis en oeuvre dans un dispositif (60) de gestion de ladite règle de classification de ladite infrastructure et **caractérisé en ce qu'**il comprend, après une étape de réception d'un message (M3) de signalisation dudit terminal (1), comprenant des données d'identification dudit utilisateur :
- une étape d'obtention d'une information relative au service de communication, dite information de service, ladite information comprenant un paramètre de filtrage relatif auxdites données d'identification reçues,
- une étape de détermination de ladite règle de classification de l'au moins un paquet en fonction de l'information de service obtenue, la règle étant utilisée pour le routage de proche en proche dudit paquet par les entités dans l'infrastructure de communications,
- une étape d'émission d'un message (M6) d'instruction comprenant ladite règle de classification déterminée à destination dudit terminal (1),
- une étape d'émission d'un message (M7, M8) de configuration comprenant ladite règle de classification à destination d'au moins un dispositif d'aiguillage (40, 20) du paquet d'une entité d'accès de l'infrastructure de communication.

2. Procédé de gestion selon la revendication 1, où l'information de service comprend un paramètre de filtrage relatif auxdites données d'identification reçues et est obtenue d'un serveur (50) comprenant des données relatives à des utilisateurs.

3. Procédé de gestion, selon la revendication 1 ou la revendication 2, où l'information de service comprend une information de gestion émise par une entité (70) de gestion de l'infrastructure de communications.

4. Procédé de gestion, selon l'une quelconque des revendications 1 à 3, où le message (M3) de signalisation est un message d'enregistrement dudit terminal (1) auprès de l'infrastructure de communications.

5. Procédé de gestion, selon l'une quelconque des revendications 1 à 4, où le message (M6) d'instruction et le message (M7) de configuration sont compris dans un même message.

6. Procédé de gestion, selon l'une quelconque des revendications 1 à 5, où l'information de service est basée sur le contenu d'au moins un champ du paquet du message de contrôle.

7. Procédé de gestion, selon l'une quelconque des revendications 1 à 6, où le dispositif de gestion est mis en oeuvre dans une entité de gestion relative à un utilisateur.

8. Procédé d'aiguillage d'un paquet d'un message de contrôle relatif à un service de communications destiné à être consommé par un terminal (1) d'un utilisateur, l'aiguillage étant réalisé dans une infrastructure (5) de communications comprenant des entités à travers lesquels le paquet est acheminé, et fournissant ledit service, le procédé mis en oeuvre dans un dispositif d'aiguillage d'une entité d'accès de l'infrastructure de communication et comprenant:
- une étape de réception du paquet du message de contrôle,
- une étape de réception d'un message (M7, M8) de configuration comprenant une règle de classification émis par un dispositif (60) de gestion de ladite règle de classification,
- une étape de détermination d'un paramètre de routage en fonction de la règle contenue dans le message de configuration reçu, ledit paramètre permettant aux entités de router le paquet du message de contrôle de proche en proche,
- une étape d'insertion du paramètre de routage déterminé dans un champ dudit paquet,
- une étape de sélection d'une entité vers laquelle émettre le paquet en fonction du paramètre de routage,
- une étape d'émission dudit paquet à destination de l'entité sélectionnée.

9. Procédé d'aiguillage selon la revendication 8, où le paramètre de routage est inséré dans un champ NSH (en anglais *Network Service Header*) de l'en-tête du paquet.

10. Dispositif (60) de gestion d'une règle de classification d'un paquet d'un message de contrôle relatif à un service de communications destiné à être consommé par un terminal (1) d'un utilisateur, ladite règle étant relative au routage dudit paquet dans une infrastructure (5) de communications fournissant ledit service et comprenant des entités à travers lesquelles le paquet est acheminé, **caractérisé en ce qu'**il comprend, outre un récepteur agencé pour recevoir un message (M3) de signalisation dudit terminal (1), comprenant des données d'identification dudit utilisateur, les modules suivants :
- un module d'obtention configuré pour obtenir une information relative au service de communication, dite information de service, ladite information comprenant un paramètre de filtrage relatif auxdites données d'identification reçues,
- un module de détermination configuré pour déterminer ladite règle de classification dudit paquet en fonction de l'information de service obtenue, la règle étant utilisée pour le routage de proche en proche dudit paquet par les entités dans l'infrastructure (5) de communications,
- un émetteur configuré pour émettre
- un message (M6) d'instruction comprenant ladite règle de classification déterminée à destination dudit terminal.
- un message (M7, M8) de configuration comprenant ladite règle de classification à destination d'au moins un dispositif d'aiguillage du paquet d'une entité d'accès de l'infrastructure de communication.

11. Dispositif d'aiguillage (20, 40) d'un paquet d'un message de contrôle relatif à un service de communications destiné à être consommé par un terminal (1) d'un utilisateur, mis en oeuvre dans une infrastructure de communications comprenant des entités à travers lesquelles le paquet est acheminé et fournissant ledit service, le dispositif d'aiguillage étant mis en oeuvre dans une entité d'accès de l'infrastructure de communication et comprenant les modules suivants :
- un récepteur agencé pour recevoir
- le paquet du message de contrôle,
- un message (M7, M8) de configuration émis par un dispositif (60) de gestion d'une règle de classification, le message comprenant ladite règle de classification,
- un module de détermination configuré pour déterminer un paramètre de routage en fonction de la règle contenue dans le message de configuration reçu, ledit paramètre permettant aux entités de router le paquet du message de contrôle de proche en proche,
- un module d'insertion configuré pour insérer le paramètre de routage déterminé dans un champ dudit paquet,
- un module de sélection configuré pour sélectionner une entité vers laquelle émettre ledit paquet en fonction du paramètre de routage inséré,
- un émetteur configuré pour émettre ledit paquet à destination de l'entité sélectionnée.

12. Système de gestion d'une règle de classification comprenant:
- au moins un dispositif (60) de gestion d'une règle de classification selon la revendication 10,
- au moins un dispositif (20, 40) d'aiguillage selon la revendication 11.

13. Programme d'ordinateur, **caractérisé en ce qu'**il comprend des instructions pour la mise en oeuvre des étapes du procédé de gestion selon la revendication 1, lorsque ce procédé est exécuté par un processeur.

14. Support d'enregistrement lisible par un dispositif de gestion sur lequel est enregistré le programme selon la revendication 13.

## Patentansprüche

1. Verfahren zur Verwaltung einer Klassifizierungsregel eines Pakets einer Steuernachricht bezüglich eines Kommunikationsdiensts, dazu bestimmt, von einem Endgerät (1) eines Benutzers verbraucht zu werden, wobei die Regel sich auf das Routen des Pakets in einer Kommunikationsinfrastruktur (5) bezieht, die den Dienst liefert und Entitäten enthält, über die das Paket befördert wird, wobei das Verfahren in einer Verwaltungsvorrichtung (60) der Klassifizierungsregel der Infrastruktur durchgeführt wird und **dadurch gekennzeichnet ist, dass** es nach einem Schritt des Empfangs einer Identifikationsdaten des Benutzers enthaltenden Signalisierungsnachricht (M3) vom Endgerät (1) enthält:
- einen Schritt des Erhalts einer Information bezüglich des Kommunikationsdiensts, Dienstinformation genannt, wobei die Information einen Filterparameter bezüglich der empfangenen Identifikationsdaten enthält,
- einen Schritt der Bestimmung der Klassifizierungsregel des mindestens einen Pakets abhängig von der erhaltenen Dienstinformation, wobei die Regel zum schrittweisen Routens des Pakets durch die Entitäten in der Kommunikationsinfrastruktur verwendet wird,
- einen Schritt des Sendens einer die bestimmte Klassifizierungsregel enthaltenden Anweisungsnachricht (M6) an das Endgerät (1),
- einen Schritt des Sendens einer die Klassifizierungsregel enthaltenden Konfigurationsnachricht (M7, M8) an mindestens eine Vermittlungsvorrichtung (40, 20) des Pakets einer Zugangsentität der Kommunikationsinfrastruktur.

2. Verwaltungsverfahren nach Anspruch 1, wobei die Dienstinformation einen Filterparameter bezüglich der empfangenen Identifikationsdaten enthält und von einem Server (50) erhalten wird, der Daten bezüglich von Benutzern enthält.

3. Verwaltungsverfahren nach Anspruch 1 oder Anspruch 2, wobei die Dienstinformation eine Verwaltungsinformation enthält, die von einer Verwaltungsentität (70) der Kommunikationsinfrastruktur gesendet wird.

4. Verwaltungsverfahren nach einem der Ansprüche 1 bis 3, wobei die Signalisierungsnachricht (M3) eine Registrierungsnachricht des Endgeräts (1) bei der Kommunikationsinfrastruktur ist.

5. Verwaltungsverfahren nach einem der Ansprüche 1 bis 4, wobei die Anweisungsnachricht (M6) und die Konfigurationsnachricht (M7) in der gleichen Nachricht enthalten sind.

6. Verwaltungsverfahren nach einem der Ansprüche 1 bis 5, wobei die Dienstinformation auf dem Inhalt mindestens eines Felds des Pakets der Steuernachricht basiert.

7. Verwaltungsverfahren nach einem der Ansprüche 1 bis 6, wobei die Verwaltungsvorrichtung in einer Verwaltungsentität bezüglich eines Benutzers eingesetzt wird.

8. Verfahren zur Vermittlung eines Pakets einer Steuernachricht bezüglich eines Kommunikationsdiensts, dazu bestimmt, von einem Endgerät (1) eines Benutzers verbraucht zu werden, wobei die Vermittlung in einer Kommunikationsinfrastruktur (5) durchgeführt wird, die Entitäten enthält, über die das Paket befördert wird, und die den Dienst liefert, wobei das Verfahren in einer Vermittlungsvorrichtung von einer Zugangsentität der Kommunikationsinfrastruktur durchgeführt wird und enthält:
- einen Schritt des Empfangs des Pakets der Steuernachricht,
- einen Schritt des Empfangs einer eine Klassifizierungsregel enthaltenden Konfigurationsnachricht (M7, M8), die von einer Verwaltungsvorrichtung (60) der Klassifizierungsregel gesendet wird,
- einen Schritt der Bestimmung eines Routingparameters abhängig von der in der empfangenen Konfigurationsnachricht enthaltenen Regel, wobei der Parameter es den Entitäten ermöglicht, das Paket der Steuernachricht schrittweise zu routen,
- einen Schritt der Einfügung des bestimmten Routingparameters in ein Feld des Pakets,
- einen Schritt der Auswahl einer Entität, zu der das Paket abhängig vom Routingparameter gesendet werden soll,
- einen Schritt des Sendens des Pakets an die ausgewählte Entität.

9. Vermittlungsverfahren nach Anspruch 8, wobei der Routingparameter in ein Feld NSH (englisch Network Service Header) der Kopfzeile des Pakets eingefügt wird.

10. Vorrichtung zur Verwaltung (60) einer Klassifizierungsregel eines Pakets einer Steuernachricht bezüglich eines Kommunikationsdiensts, dazu bestimmt, von einem Endgerät (1) eines Benutzers verbraucht zu werden, wobei die Regel sich auf das Routen des Pakets in einer Kommunikationsinfrastruktur (5) bezieht, die den Dienst liefert und Entitäten enthält, über die das Paket befördert wird, **dadurch gekennzeichnet, dass** sie außer einem Empfänger, der eingerichtet ist, um eine Signalisierungsnachricht (M3) vom Endgerät (1) zu empfangen, die Identifikationsdaten des Benutzers enthält, die folgenden Module enthält:
- ein Erhaltsmodul, das konfiguriert ist, eine Information bezüglich des Kommunikationsdiensts zu erhalten, Dienstinformation genannt, wobei die Information einen Filterparameter bezüglich der empfangenen Identifikationsdaten enthält,
- ein Bestimmungsmodul, das konfiguriert ist, die Klassifizierungsregel des Pakets abhängig von der empfangenen Dienstinformation zu bestimmen, wobei die Regel zum schrittweisen Routen des Pakets durch die Entitäten in der Kommunikationsinfrastruktur (5) verwendet wird,
- einen Sender, der konfiguriert ist zu senden
- eine die bestimmte Klassifizierungsregel enthaltende Anweisungsnachricht (M6) an das Endgerät,
- eine die Klassifizierungsregel enthaltende Konfigurationsnachricht (M7, M8) an mindestens eine Vermittlungsvorrichtung des Pakets einer Zugangsentität der Kommunikationsinfrastruktur.

11. Vorrichtung zur Vermittlung (20, 40) eines Pakets einer Steuernachricht bezüglich eines Kommunikationsdiensts, dazu bestimmt, von einem Endgerät (1) eines Benutzers verbraucht zu werden, implementiert in einer Kommunikationsinfrastruktur, die Entitäten enthält, über die das Paket befördert wird, und die den Dienst liefert, wobei die Vermittlungsvorrichtung in einer Zugangsentität der Kommunikationsinfrastruktur implementiert wird und die folgenden Module enthält:
- einen Empfänger, der eingerichtet ist, um zu empfangen
- das Paket der Steuernachricht,
- eine von einer Verwaltungsvorrichtung (60) einer Klassifizierungsregel gesendete Konfigurationsnachricht (M7, M8), wobei die Nachricht die Klassifizierungsregel enthält,
- ein Bestimmungsmodul, das konfiguriert ist, einen Routingparameter abhängig von der in der empfangenen Konfigurationsnachricht enthaltenen Regel zu bestimmen, wobei der Parameter es den Entitäten ermöglicht, das Paket der Steuernachricht schrittweise zu routen,
- ein Einfügungsmodul, das konfiguriert ist, den bestimmten Routingparameter in ein Feld des Pakets einzufügen,
- ein Auswahlmodul, das konfiguriert ist, eine Entität auszuwählen, zu der das Paket abhängig vom eingefügten Routingparameter zu senden ist,
- einen Sender, der konfiguriert ist, das Paket an die ausgewählte Entität zu senden.

12. System zur Verwaltung einer Klassifizierungsregel, das enthält:
- mindestens eine Verwaltungsvorrichtung (60) einer Klassifizierungsregel nach Anspruch 10,
- mindestens eine Vermittlungsvorrichtung (20, 40) nach Anspruch 11.

13. Computerprogramm, **dadurch gekennzeichnet, dass** es Anweisungen zur Durchführung der Schritte des Verwaltungsverfahrens nach Anspruch 1 enthält, wenn dieses Verfahren von einem Prozessor ausgeführt wird.

14. Speicherträger, der von einer Verwaltungsvorrichtung lesbar ist, auf dem das Programm nach Anspruch 13 gespeichert ist.

## Claims

1. Method for managing a rule for classifying a packet of a control message relating to a communications service intended to be used by a terminal (1) of a user, said rule relating to the routing of said packet in a communications infrastructure (5) providing said service and comprising entities through which the packet is forwarded, the method being implemented in a device (60) for managing said classification rule of said infrastructure and **characterized in that** it comprises, after a step of receiving a signalling message (M3) of said terminal (1), comprising data for identifying said user:
- a step of obtaining an information item relating to the communication service, termed service information item, said information item comprising a filtering parameter relating to said identification data received,
- a step of determining said rule for classifying the at least one packet as a function of the service information item obtained, the rule being used for the gradual routing of said packet by the entities in the communications infrastructure,
- a step of emitting an instruction message (M6) comprising said determined classification rule destined for said terminal (1),
- a step of emitting a configuration message (M7, M8) comprising said classification rule destined for at least one device (40, 20) for steering the packet from an access entity of the communication infrastructure.

2. Management method according to Claim 1, where the service information item comprises a filtering parameter relating to said identification data received and is obtained from a server (50) comprising data relating to users.

3. Management method, according to Claim 1 or Claim 2, where the service information item comprises a management information item emitted by a management entity (70) of the communications infrastructure.

4. Management method, according to any one of Claims 1 to 3, where the signalling message (M3) is a message of registration of said terminal (1) with the communications infrastructure.

5. Management method, according to any one of Claims 1 to 4, where the instruction message (M6) and the configuration message (M7) are included in one and the same message.

6. Management method, according to any one of Claims 1 to 5, where the service information item is based on the content of at least one field of the packet of the control message.

7. Management method, according to any one of Claims 1 to 6, where the management device is implemented in a management entity relating to a user.

8. Method for steering a packet of a control message relating to a communications service intended to be used by a terminal (1) of a user, the steering being carried out in a communications infrastructure (5) comprising entities through which the packet is forwarded, and providing said service, the method being implemented in a device for steering from an access entity of the communication infrastructure and comprising:
- a step of receiving the packet of the control message,
- a step of receiving a configuration message (M7, M8) comprising a classification rule emitted by a device (60) for managing said classification rule,
- a step of determining a routing parameter as a function of the rule contained in the configuration message received, said parameter making it possible for the entities to route the packet of the control message gradually,
- a step of inserting the routing parameter determined into a field of said packet,
- a step of selecting an entity to which to emit the packet as a function of the routing parameter,
- a step of emitting said packet destined for the selected entity.

9. Steering method according to Claim 8, where the routing parameter is inserted into an NSH (Network Service Header) field of the header of the packet.

10. Device (60) for managing a rule for classifying a packet of a control message relating to a communications service intended to be used by a terminal (1) of a user, said rule relating to the routing of said packet in a communications infrastructure (5) providing said service and comprising entities through which the packet is forwarded, **characterized in that** it comprises, in addition to a receiver designed to receive a signalling message (M3) of said terminal (1), comprising data for identifying said user, the following modules:
- an obtaining module configured to obtain an information item relating to the communication service, termed service information item, said information item comprising a filtering parameter relating to said identification data received,
- a determination module configured to determine said rule for classifying said packet as a function of the service information item obtained, the rule being used for the gradual routing of said packet by the entities in the communications infrastructure (5),
- an emitter configured to emit
- an instruction message (M6) comprising said determined classification rule destined for said terminal,
- a configuration message (M7, M8) comprising said classification rule destined for at least one device for steering the packet from an access entity of the communication infrastructure.

11. Device (20, 40) for steering a packet of a control message relating to a communications service intended to be used by a terminal (1) of a user, implemented in a communications infrastructure comprising entities through which the packet is forwarded and providing said service, the steering device being implemented in an access entity of the communication infrastructure and comprising the following modules:
- a receiver designed to receive
- the packet of the control message,
- a configuration message (M7, M8) emitted by a device (60) for managing a classification rule, the message comprising said classification rule,
- a determination module configured to determine a routing parameter as a function of the rule contained in the configuration message received, said parameter making it possible for the entities to route the packet of the control message gradually,
- an insertion module configured to insert the routing parameter determined into a field of said packet,
- a selection module configured to select an entity to which to emit said packet as a function of the routing parameter inserted,
- an emitter configured to emit said packet destined for the selected entity.

12. System for managing a classification rule comprising:
- at least one device (60) for managing a classification rule according to Claim 10,
- at least one steering device (20, 40) according to Claim 11.

13. Computer program, **characterized in that** it comprises instructions for the implementation of the steps of the management method according to Claim 1, when this method is executed by a processor.

14. Recording medium readable by a management device on which the program according to Claim 13 is recorded.
